# EUROPÄISCHE PATENTSCHRIFT

(11) **EP 1 070 721 B1**
(45) Veröffentlichungstag und Bekanntmachung des Hinweises auf die Patenterteilung: **07.05.2003**
(21) Anmeldenummer: 00112132.6
(22) Anmeldetag: 06.06.2000
(51) Int. Cl.: C07F 7/18, C07C 309/42

(54) **Verfahren zur Herstellung von Epoxysilanen**
Process for preparing epoxysilanes
Procédé de préparation d'époxysilanes

(30) Priorität: 23.07.1999 DE 19934576
(43) Veröffentlichungstag der Anmeldung: 24.01.2001
(73) Patentinhaber: Degussa AG, 40474 Düsseldorf (DE)
(72) Erfinder: Bade, Stefan, Dr., 79618 Rheinfelden (DE); Schön, Uwe, Dr., 79618 Rheinfelden (DE); Rauleder, Hartwig, Dr., 79618 Rheinfelden (DE)

(56) Entgegenhaltungen:
- EP-A- 0 288 286
- EP-A- 0 548 974

## Beschreibung

Die vorliegende Erfindung betrifft ein Verfahren zur Herstellung von Epoxysilanen durch Umsetzen eines Hydrogensilans mit einem Allylglycidether in Gegenwart eines Katalysators und Aufarbeitung des dabei erhaltenen Rohprodukts.

Die Herstellung von Epoxysilanen durch Umsetzen von Hydrogensilanen mit Allylglycidether in Gegenwart eines Hydrosilylierungskatalysators auf der Basis von Pt(0) wird in der deutschen Patentanmeldung 198 05 083.6 beschrieben.

Für Hydrosilylierungsreaktionen können grundsätzlich aber auch andere Katalysatorsysteme zum Einsatz kommen, beispielsweise einfache oder komplexe Verbindungen des Nickels, Platins, Rhodiums oder Rutheniums in ihren verschiedenen Oxidationsstufen, vgl. u. a. EP 0 262 642 A2, EP 0 277 023 A2, EP 0 288 286 A2 und EP 0 548 974 A1.

Es ist auch bekannt, daß beispielsweise bei der Umsetzung von Allylglycidether mit Trimethoxysilan, 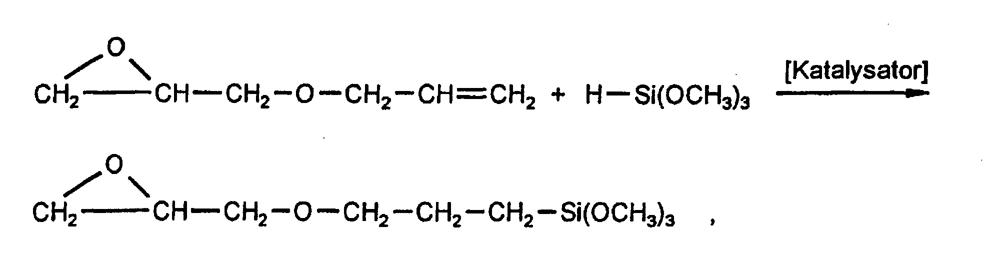 das resultierende Rohprodukt neben 3-Glycidyloxypropyltrimethoxysilan (GLYMO) 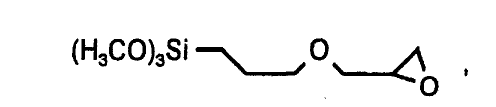 noch unumgesetzte Edukte, isomerisierte Allylglycidether, isomerisiertes Epoxysilan,

### 2-Glycidyl-oxy-1-methyl-ethyl-trimethoxysilan (iso-GLYMO)

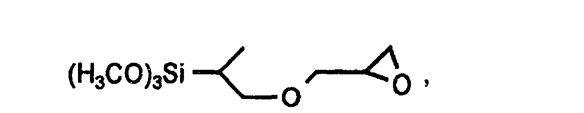

Tetraalkoxysilan und "cyclisches Alkoxysilan", gebildet durch Cyclisierung von Epoxysilanen, -

### 1-Di-methoxy-sila-2,5-dioxa-3-methoxy-methyl-cyclooctan (cyclo-GLYMO)

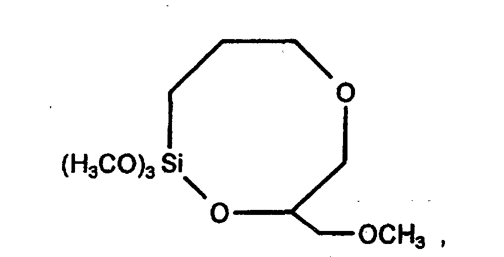

sowie den eingesetzten Katalysator enthält.

Das Rohprodukt wird üblicherweise mittels Kolonnendestillation aufgearbeitet. Die Aufarbeitung ist in der Regel sehr aufwendig und langwierig. Ferner ist festzustellen, daß während der destillativen Aufarbeitung das "cyclisierte Alkoxysilan" (cyclo-GLYMO) ständig nachgebildet wird.

Da das Zielprodukt "Epoxysilan" und das "cyclisierte Epoxysilan" sich nur wenig in ihren Siedepunkten unterscheiden, verlängert sich die Laufzeit einer Batch-Destillation deutlich, und eine quantitative Abtrennung des "cyclisierten Epoxysilans" mittels Kolonnendestillation ist großtechnisch nicht möglich. Die quantitative Abtrennung des "cyclisierten Epoxysilans" vom Hauptprodukt ist jedoch zur Erzielung höchster Epoxysilan-Reinheiten erforderlich. Zudem entsteht unter den vorliegenden Bedingungen der Destillation ein hoher Anteil unerwünschter Hochsieder, der die Ausbeute an Epoxysilan mindert.

Es bestand daher die Aufgabe, ein Verfahren zur Herstellung von Epoxysilanen bereitzustellen, das diese Nachteile nach Möglichkeit vermeidet.

Überraschenderweise wurde gefunden, daß die aufgeführten Nachteile in vorteilhafter Weise vermieden werden können, wenn die Aufarbeitung des Epoxysilan-Rohprodukts in zwei Schritten durchgeführt wird, wobei in Schritt 1 aus dem direkt aus der Epoxysilan-Synthese erhaltenen Rohprodukt der noch enthaltene Katalysator entfernt wird, und in Schritt 2 das im wesentlichen vom Katalysator befreite Rohprodukt-Gemisch einer destillativen Aufarbeitung unterzogen wird.

Bevorzugt führt man die destillative Aufarbeitung des im wesentlichen katalysatorfreien Rohprodukts mittels Kolonnendestillation durch. Das Entfernen des Hydrosilylierungskatalysators aus dem Epoxysilan-Rohprodukt erfolgt geeigneterweise durch Adsorption oder durch Reduktion.

Nach dem vorliegenden Verfahren werden Epoxysilane erhalten, die hohen Reinheitsanforderungen genügen.

Gegenstand der vorliegenden Erfindung ist somit ein Verfahren zur Herstellung von Epoxysilanen durch Umsetzen eines Hydrogensilans mit einem Allylglycidether in Gegenwart eines Hydrosilylierungskatalysators und Aufarbeitung des dabei erhaltenen Rohprodukts, das dadurch gekennzeichnet ist, daß man den Katalysator aus dem Rohprodukt entfernt und anschließend das Rohprodukt destilliert.

Beim erfindungsgemäßen Verfahren kann man als Hydrogensilankomponente beispielsweise Trimethoxysilan, Triethoxysilan, Methyldimethoxysilan, Methyldiethoxysilan, Tri-n-propoxysilan, Tri-n-butoxysilan, Tri-iso-propoxysilan, Methyldi-n-propoxysilan, Methyldi-iso-propoxysilan, Methyldi-nbutoxysilan, Tri-iso-butoxysilan, Methyldi-iso-butoxysilan, Phenyldimethoxysilan, Phenyldiethoxysilan, Phenyldi-n-propoxysilan, Phenyldi-iso-propoxysilan, Phenyldi-n-butoxysilan oder Phenyldi-iso-butoxysilan einsetzen.

Vorzugsweise stellt man beim erfindungsgemäßen Verfahren Epoxysilane der allgemeinen Formel I 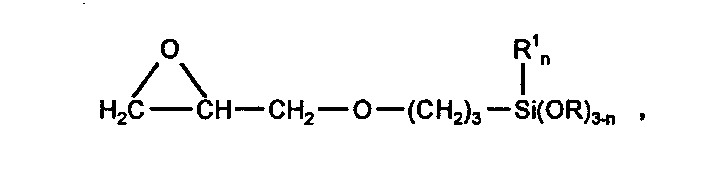 wobei R eine lineare oder verzweigte Alkylgruppe mit 1 bis 4 C-Atomen oder eine Arylgruppe mit 6 bis 12 C-Atomen und R¹ eine lineare oder verzweigte Alkylgruppe mit 1 bis 4 C-Atomen darstellen und n gleich 0 oder 1 oder 2 ist,
her, insbesondere 3-Glycidyloxypropyltrimethoxysilan (GLYMO), 3-Glycidyloxypropyltriethoxysilan (GLYEO), 3-Glycidyloxypropyltri-n-propoxysilan, 3-Glycidyloxypropyltri-iso-propoxysilan, 3-Glycidyloxypropyltri-n-butoxysilan, 3-Glycidyloxypropyltri-iso-butoxysilan.

Bevorzugt werden beim erfindungsgemäßen Verfahren Edelmetallkatalysatoren auf Basis von Pt, Pd, Rh oder Ir als Hydrosilylierungskatalysator eingesetzt.

Die Hydrosilylierungsreaktion wird unter an sich bekannten Bedingungen durchgeführt. Aus dem so erhaltenen Rohprodukt wird nun erfindungsgemäß der Katalysator in der Regel bis auf Konzentrationen < 10 mg/kg, gerechnet als Edelmetall, entfernt und das im wesentlichen katalysatorfreie Rohprodukt destillativ aufgearbeitet, beispielsweise mittels Kolonnendestillation.

Vorzugsweise kann man den Katalysator durch Adsorption aus dem Rohprodukt entfernen. Geeigneterweise führt man die Adsorption in einem festen Adsorberbett durch. Man kann aber auch einen festen Adsorber in das zu behandelnde Rohprodukt geben und nachfolgend durch Filtration oder durch ein anderes Flüssig/Festtrennverfahren trennen.

Vorzugsweise setzt man Adsorber mit einer mittleren Korngröße von 1 bis 30 mm ein, besonders bevorzugt sind solche mit 5 bis 20 mm.

Beim erfindungsgemäßen Verfahren eingesetzte Adsorber besitzen in der Regel eine innere Oberfläche von 10 bis 1 500 m²/g.

Insbesondere kann man als Adsorber Aktiv-Kohle, Kieselsäure, beispielsweise pyrogene oder gefällte Kieselsäure, Aluminiumoxid, Titandioxid, Zirkonoxid oder Zeolithe sowie Polymerharze einsetzen. Man kann aber auch andere als Adsorber geeignete Materialien einsetzen. Beim vorliegenden Verfahren kann man auch ein Gemisch fester Adsorber einsetzen. Geeigneterweise verwendet man neutrale Adsorber. Ferner sollten die beim erfindungsgemäßen Verfahren eingesetzten Adsorptionsmittel im wesentlichen wasserfrei sein.

Vorzugsweise setzt man beim erfindungsgemäßen Verfahren Adsorber mit einer inneren Oberfläche (BET) von 150 bis 1 400 m²/g, besonders vorzugsweise von 600 bis 1 400 m²/g, ganz besonders vorzugsweise von 1 000 bis 1 500 m²/g, ein.

Die Adsorption führt man beim erfindungsgemäßen Verfahren bevorzugt bei einer Temperatur im Bereich von 0 bis 120 °C durch, besonders bevorzugt ist eine Temperatur im Bereich von 10 bis 50 °C, ganz besonders bevorzugt ist eine Temperatur im Bereich von 10 bis 25 °C.

Die erfindungsgemäße Aufarbeitung des besagten Rohprodukts kann unter vermindertem Druck durchgeführt werden.

Vorzugsweise führt man die Adsorption beim erfindungsgemäßen Verfahren bei einem Druck im Bereich von 0,5 bis 5 bar abs., besonders vorzugsweise bei 0,7 bis 2 bar abs., ganz besonders vorzugsweise bei 1,0 bis 1,5 bar abs., durch.

Geeigneterweise beträgt die Verweilzeit des Rohprodukts am Adsorberbett bzw. am Adsorptionsmittel 5 Minuten bis 2 Stunden, bevorzugt ist eine Kontaktzeit von 10 bis 60 Minuten, besonders vorzugsweise beträgt die Zeitspanne 15 bis 45 Minuten.

Beim erfindungsgemäßen Verfahren kann der Katalysator auch durch Reduktion aus dem Rohprodukt abgeschieden und so aus dem Rohprodukt entfernt werden. Als Reduktionsmittel kann beispielsweise metallisches Zink in Form von Pulver oder von Stücken, die leicht wieder aus dem Rohprodukt zu entfernen sind, eingesetzt werden.

Durch die Anwendung des erfindungsgemäßen Verfahrens können folgende Vorteile erzielt werden:
- Erzielung besonders hoher Epoxysilan-Reinheiten, insbesondere ≥ 99 %, bei der destillativen Aufarbeitung, weil die Nachbildung des "cyclisierten Epoxysilans" (= "cyclisches Alkoxysilan") während der Destillation nun weitestgehend unterbleibt.
- Verkürzung des Zwischenlaufs bei der destillativen Aufarbeitung und damit Steigerung der Destillationskapazität.
- Geringerer Anteil an Hochsiedern, die während der Destillation entstehen, und damit Steigerung der destillativen Epoxysilan-Ausbeute.
- Der adsorbierte Edelmetallkatalysator kann einer Aufarbeitung mit Edelmetall-Rückgewinnung zugeführt werden.
- Keine Epoxysilan-Verluste, wie sie bei der Aufarbeitung des Epoxysilan-Rohgemisches mit Hilfe eines Dünnschicht-Verdampfers entstehen würden.
- Keine Hilfsmittelzugabe erforderlich, um den Katalysator zu desaktivieren.
- Geringer Energieeinsatz und geringer technischer Aufwand bei adsorptiver Katalysator-Entfernung.

Die vorliegende Erfindung wird durch die nachfolgenden Beispiele näher erläutert.

### Beispiel 1

GLYMO-Rohprodukt mit einem Pt-Gehalt von 12 ppm wird bei 20 °C über ein Adsorberbett, bestehend aus gekörnter Aktiv-Kohle mit einem mittleren Durchmesser von 1,5 mm, geleitet. Der Vordruck am Adsorberbett beträgt 1,1 bar abs. Das Adsorberbett füllt ein Volumen von 100 cm³ aus, die Masse der Aktiv-Kohle beträgt 50,0 g, der Leerraumanteil beträgt ca. 60 %. Die Abmessungen des Adsorberbetts betragen: Innendurchmesser 22 mm, Länge 320 mm. Mit einem Volumenstrom von 200 Nml/h Epoxysilan und damit einer Verweilzeit von 18 Minuten am Adsorberbett wird im Eluat ein Pt-Gehalt von 2 ppm festgestellt. Somit wird der Pt-Gehalt des Epoxysilans um 84 % gesenkt. Das Epoxysilan erfährt am Adsorberbett nach GC-Analyse keine Veränderung.

Die destillative Aufarbeitung des adsorptiv gereinigten Epoxysilan-Rohprodukts in einer Batch-Destillationskolonne erbrachte eine Epoxysilan-Reinheit von 99,4 %. Unter denselben Randbedingungen konnte mit einem nicht über Adsorption gereinigten Epoxysilan-Rohprodukt nur eine Reinheit von 98,6 % erzielt werden. Die Massenbilanzierung der einzelnen Fraktionen ergab, daß das unerwünschte cyclisierte Epoxysilan nur dann während der Destillation nachgebildet wird, wenn keine adsorptive Reinigung des Epoxysilan-Rohgemisches erfolgt und der Katalysator während der Destillation zugegen ist. Wird das Epoxysilan hingegen vor der Destillation adsorptiv gereinigt, wird kein cyclisiertes Epoxysilan während der Destillation nachgebildet.

### Beispiel 2

GLYMO-Rohprodukt mit einem Pt-Gehalt von 12 ppm wird bei 20 °C über ein Adsorberbett, bestehend aus Aktiv-Kohle in Zylinderform (mittlerer Durchmesser von 2 mm, mittlere Länge von 12 mm), geleitet. Der Vordruck am Adsorberbett beträgt 1,05 bar abs. Das Adsorberbett füllt ein Volumen von 200 cm³ aus, die Masse der Aktiv-Kohle beträgt 100,0 g, der Leerraumanteil beträgt ca. 65 %. Die Abmessungen des Adsorberbetts betragen: Innendurchmesser 30 mm, Länge 300 mm. Mit einem Volumenstrom von 200 Nml/h Epoxysilan und damit einer Verweilzeit von 39 Minuten am Adsorberbett wird im Eluat ein Pt-Gehalt von 1 ppm festgestellt. Somit wird der Pt-Gehalt des Epoxysilans um 92 % gesenkt. Das Epoxysilan erfährt am Adsorberbett nach GC-Analyse keine Veränderung.

Wie im Beispiel 1 wird bei der anschließenden Batch-Destillation das cyclisierte Epoxysilan nicht mehr während der Destillation nachgebildet, nachdem eine adsorptive Reinigung des Epoxysilan-Rohprodukts erfolgt ist. Nach adsorptiver Reinigung kann bei der destillativen Trennung eine Epoxysilan-Reinheit von 99,5 % erreicht werden, während ohne adsorptive Reinigung des Epoxysilan-Rohgemisches in der destillativen Aufarbeitung unter gleichen Randbedingungen nur eine Reinheit von 98,5 % erzielt werden kann.

### Beispiel 3

GLYMO-Rohprodukt mit einem Pt-Gehalt von 3 ppm wird bei 20 °C über ein Adsorberbett, bestehend aus Aktiv-Kohle gekörnt (mittlerer Durchmesser von 1,5 mm), geleitet. Der Vordruck am Adsorberbett beträgt 1,05 bar abs. Das Adsorberbett füllt ein Volumen von 100 cm³ aus, die Masse der Aktiv-Kohle beträgt 48,1 g, der Leerraumanteil beträgt ca. 60 %. Die Abmessungen des Adsorberbetts betragen: Innendurchmesser 20 mm, Länge 320 mm. Mit einem Volumenstrom von 80 Nml/h Epoxysilan und einer Verweilzeit von 45 Minuten am Adsorberbett liegt der Pt-Gehalt im Eluat unterhalb der Nachweisgrenze von < 1 ppm. Platin wird also nahezu vollständig entfernt. Das Epoxysilan erfährt am Adsorberbett nach GC-Analyse kein Veränderung.

Wie im Beispiel 1 wird bei der anschließenden Batch-Destillation das cyclisierte Epoxysilan nicht mehr während der Destillation nachgebildet, nachdem eine adsorptive Reinigung des Epoxysilan-Rohprodukts erfolgt ist. Nach adsorptiver Reinigung kann bei der destillativen Trennung eine Epoxysilan-Reinheit von 99,5 % erreicht werden, während ohne adsorptive Reinigung des Epoxysilan-Rohgemisches in der destillativen Aufarbeitung unter gleichen Randbedingungen nur eine Reinheit von 98,5 % erzielt werden kann.

### Beispiel 4

400 g des Eluats aus Beispiel 3 mit einem Gehalt an cyclisiertem Epoxysilan von 0,10 % (entsprechend 0,4 g cyclisiertem Epoxysilan) werden in einer Batch-Destillation von den Leichtsiedem (20 % entsprechend 80 g) befreit und unter Bedingungen unendlich hohen Rücklaufs für 48 Stunden bei 170 °C und bei einem Druck von 63 mbar abs. gehalten. Nach der Zeit von 48 Stunden wurde der Sumpf erneut mit Hilfe der Gaschromatographie untersucht, der Anteil an cyclisiertem Epoxysilan liegt nun bei 0,125%, entsprechend 0,4 g. Es hat also keine Nachbildung des cyclisierten Epoxysilans unter den Bedingungen der Destillation und in Abwesenheit des homogenen Katalysators stattgefunden.

### Beispiel 5

400 g des Epoxysilan-Rohgemisches aus Beispiel 3, welches nicht der Adsorption unterzogen wird und einen Gehalt an cyclisiertem Epoxysilan von 0,10 % (entsprechend 0,4 g) besitzt, werden in einer Batch-Destillation von den Leichtsiedern (20 % entsprechend 80 g) befreit und unter Bedingungen unendlich hohen Rücklaufs für 48 Stunden bei 170 °C und bei einem Druck von 63 mbar abs. gehalten. Nach der Zeit von 48 Stunden wird der Sumpf erneut mit Hilfe der Gaschromatographie untersucht, der Anteil an cyclisiertem Epoxysilan liegt nun bei 0,45 %, entsprechend 1,44 g. Es hat also eine Nachbildung des cyclisierten Epoxysilans unter den Bedingungen der Destillation in Gegenwart des homogenen Katalysators stattgefunden, und zwar nimmt die Menge des cyclisierten Epoxysilans um den Faktor 3,6 von 0,4 g auf 1,44 g zu.

## Patentansprüche

1. Verfahren zur Herstellung von Epoxysilanen durch Umsetzen eines Hydrogensilans mit Allylglycidether in Gegenwart eines Katalysators und Aufarbeiten des dabei erhaltenen Rohprodukts,
**dadurch gekennzeichnet,**
**daß** man den Katalysator aus dem Rohprodukt entfernt und anschließend das Rohprodukt destilliert.

2. Verfahren nach Anspruch 1,
**dadurch gekennzeichnet,**
**daß** man den Katalysator durch Adsorption aus dem Rohprodukt entfernt.

3. Verfahren nach Anspruch 1 oder 2,
**dadurch gekennzeichnet,**
**daß** man die Adsorption in einem festen Adsorberbett durchführt.

4. Verfahren nach einem der Ansprüche 1 bis 3,
**dadurch gekennzeichnet,**
**daß** man einen Adsorber mit einer mittleren Korngröße von 1 bis 30 mm einsetzt.

5. Verfahren nach einem der Ansprüche 1 bis 4,
**dadurch gekennzeichnet,**
**daß** man einen Adsorber mit einer inneren Oberfläche von 10 bis 1 500 m²/g einsetzt.

6. Verfahren nach einem der Ansprüche 1 bis 5,
**dadurch gekennzeichnet,**
**daß** man als Adsorber ein im wesentlichen wasserfreies Adsorptionsmittel einsetzt.

7. Verfahren nach einem der Ansprüche 1 bis 6,
**dadurch gekennzeichnet,**
**daß** man als Adsorber Aktiv-Kohle, Kieselsäure, Aluminiumoxid, Titanoxid, Zirkonoxid, Zeolithe oder Polymerharze einsetzt.

8. Verfahren nach einem der Ansprüche 1 bis 7,
**dadurch gekennzeichnet,**
**daß** man die Adsorption bei einer Temperatur im Bereich von 0 bis 120 °C durchführt.

9. Verfahren nach einem der Ansprüche 1 bis 8,
**dadurch gekennzeichnet,**
**daß** man die Adsorption bei einem Druck im Bereich von 0,5 bis 5 bar abs. durchführt.

10. Verfahren nach einem der Ansprüche 1 bis 9,
**dadurch gekennzeichnet,**
**daß** die Verweilzeit des Rohprodukts am Adsorberbett 5 Minuten bis 2 Stunden beträgt.

11. Verfahren nach Anspruch 1,
**dadurch gekennzeichnet,**
**daß** man den Katalysator durch Reduktion abscheidet.

12. Verfahren nach Anspruch 11,
**dadurch gekennzeichnet,**
**daß** man als Reduktionsmittel metallisches Zink einsetzt.

13. Verfahren nach einem der Ansprüche 1 bis 12,
**dadurch gekennzeichnet,**
**daß** man Epoxysilane der allgemeinen Formel I 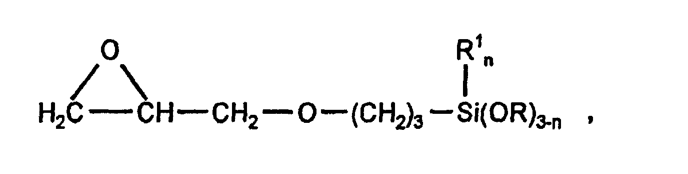 wobei R eine lineare oder verzweigte Alkylgruppe mit 1 bis 4 C-Atomen oder eine Arylgruppe und R¹ eine lineare oder verzweigte Alkylgruppe mit 1 bis 4 C-Atomen darstellen und n gleich 0 oder 1 oder 2 ist,
herstellt.

## Claims

1. A process for preparing an epoxysilane by reacting a hydrogensilane with allyl glycidyl ether in the presence of a catalyst and working up the crude product obtained, **characterized in that** the catalyst is removed from the crude product and the crude product is subsequently distilled.

2. A process according to claim 1, **characterized in that** the catalyst is removed from the crude product by adsorption.

3. A process according to claim 1 or 2, **characterized in that** the adsorption is carried out in a fixed adsorber bed.

4. A process according to any one of claims 1 to 3, **characterized in that** an adsorber having a mean particle size of from 1 to 30mm is used.

5. A process according to any one of claims 1 to 4, **characterized in that** an adsorber having an internal surface area of from 10 to 1500 m²/g is used.

6. A process according to any one of claims 1 to 5, **characterized in that** the adsorber used is an essentially water-free adsorbent.

7. A process according to any one of claims 1 to 6, **characterized in that** the adsorber used is activated carbon, silica, aluminium oxide, titanium oxide, zirconium oxide, a zeolite or a polymeric resin.

8. A process according to any one of claims 1 to 7, **characterized in that** the adsorption is carried out at a temperature in the range from 0 to 120°C.

9. A process according to any one of claims 1 to 8, **characterized in that** the adsorption is carried out at a pressure in the range from 0.5 to 5 bar abs.

10. A process according to any one of claims 1 to 9, **characterized in that** the residence time of the crude product in the adsorber bed is from 5 minutes to 2 hours.

11. A process according to claim 1, **characterized in that** the catalyst is precipitated by reduction.

12. A process according to claim 11, **characterized in that** the reducing agent used is metallic zinc.

13. A process according to any one of claims 1 to 12, **characterized in that** an epoxysilane of the general formula I 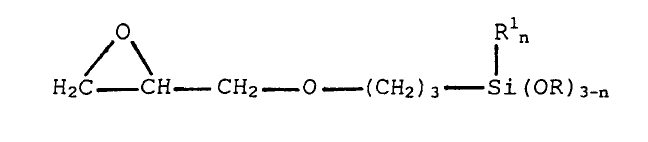 where R is a linear or branched alkyl group having from 1 to 4 carbon atoms or an aryl group and R¹ is a linear or branched alkyl group having from 1 to 4 carbon atoms and n is 0 or 1 or 2,is prepared.

## Revendications

1. Procédé de préparation d'époxysilanes par mise en réaction d'un hydrogénosilane avec un éther atlylglycidique en présence d'un catalyseur et traitement du produit brut obtenu de cette façon,
**caractérisé en ce qu'**
on chasse le catalyseur par adsorption du produit brut et qu'ensuite on distille le produit brut

2. Procédé selon la revendication 1,
**caractérisé en ce qu'**
on chasse le catalyseur par adsorption du produit brut.

3. Procédé selon l'une quelconque des revendications 1 ou 2,
**caractérisé en ce qu'**
on effectue l'adsorption sur un lit d'agent adsorbant solide.

4. Procédé selon l'une quelconque des revendications 1 à 3,
**caractérisé en ce qu'**
on met en oeuvre un agent adsorbent ayant une teille moyenne de grains de 1 à 30 mm.

5. Procédé selon l'une quelconque des revendications 1 à 4,
**caractérisé en ce qu'**
on met en oeuvre un agent adsorbant ayant une surface intérieure de 10 à 1500 m²/g.

6. Procédé selon l'une quelconque des revendications 1 à 5,
**caractérisé en ce qu'**
on met en oeuvre comme agent d'adsorption un agent adsorbant essentiellement anhydre.

7. Procédé selon l'une quelconque des revendications 1 à 6,
**caractérisé en ce qu'**
on met en oeuvre comme agent adsorbant du charbon activé, de l'acide silicique, de l'oxyde d'aluminium, de l'oxyde de titane, de l'oxyde de zirconlum, des zéolithes ou des résines de polymère.

8. Procédé selon l'une quelconque des revendications 1 à 7,
**caractérisé en ce qu'**
on effectue l'adsorption à une température dans la zone de 0 à 120°C.

9. Procédé selon l'une quelconque des revendications 1 à 8,
**caractérisé en ce qu'**
on effectue l'adsorption à une pression dans la zone de 0,5 à 5 bars abs.

10. Procédé selon l'une quelconque des revendications 1 à 9,
**caractérisé en ce que**
le temps de séjour du produit brut sur le lit d'agent adsorbant est de 5 minutes à 2 heures.

11. Procédé selon la revendication 1,
**caractérisé en ce qu'**
on sépare le catalyseur par réduction.

12. Procédé selon la revendication 11,
**caractérisé en ce qu'**
on met en oeuvre comme agent réducteur du zinc métallique.

13. Procédé selon l'une quelconque des revendications 1 à 12,
**caractérisé en ce qu'**
on prépare des époxysllanes de formule générale I, 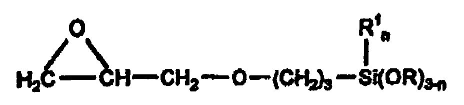 dans laquelle R est un groupe alkyle linéaire ou ramifié ayant de 1 à 4 atomes de carbone, ou un groupe aryle et R¹ est un groupe alkyle linéaire ou ramifié ayant de 1 à 4 atomes de carbone, et n est identique à 0 ou 1 ou 2.
